# EUROPÄISCHE PATENTANMELDUNG

(11) **EP 1 422 810 A1**
(43) Veröffentlichungstag der Anmeldung: **26.05.2004**
(21) Anmeldenummer: 02026017.0
(22) Anmeldetag: 21.11.2002
(51) Int. Cl.: H02K 7/18, H02K 11/04, B60K 6/04

(54) **Kraftfahrzeug-Antriebssystem**

(71) Anmelder: Continental ISAD Electronic Systems GmbH & Co. oHG, 86899 Landsberg/Lech (DE)
(72) Erfinder: Blome, Frank, 86934 Reichling (DE); Masberg, Ullrich, Prof. Dr., 51503 Rösrath (DE); Nouailles, Jean-Pierre, 86833 Landsberg/Lech (DE)
(74) Vertreter: Lippich, Wolfgang, Dipl.-Phys, Dr.rer.nat.

(57) **Zusammenfassung**

Die Erfindung betrifft ein Kraftfahrzeug-Antriebssystem mit einem Verbrennungsmotor (1), einer elektrischen Maschine (2), die als Starter, Generator oder Starter-Generator ausgebildet ist und auf der Kurbelwelle (4) des Verbrennungsmotors (1) oder einer Verlängerung hiervon sitzt, wobei die elektrische Maschine (2) eine Mehrphasenmaschine ist, einer Mehrphasen-Leistungselektronikeinheit (3) für die elektrische Maschine (2), wobei die Leistungselektronikeinheit (3) relativ zur elektrischen Maschine (2) in axialer und radialer Richtung versetzt angeordnet ist, und die elektrische Maschine (2) und die Leistungselektronikeinheit (3, 3') über starre elektrische Leitungen elektrisch miteinander verbunden sind. Gemäß einem weiteren Aspekt weist der Verbrennungsmotor (1) Befestigungspunkte (15) auf, die für die Befestigung eines herkömmlichen Zahnkranzeinspur-Starters geeignet sind. Die Leistungselektronikeinheit (3) ist an den genannten Befestigungspunkten (15) befestigt und in demjenigen Bereich angeordnet, in dem ein herkömmlicher Zahnkranzeinspur-Starter liegen würde.

## Beschreibung

Die Erfindung betrifft ein Kraftfahrzeug-Antriebssystem mit einem Verbrennungsmotor und einer auf der Kurbelwelle des Verbrennungsmotors sitzenden elektrischen Maschine, die als Starter, Generator oder Starter-Generator ausgebildet ist.

Ein Antriebssystem dieser Art mit einem Kurbelwellenstarter-Generator ist beispielsweise aus der WO97/08456 bekannt. Auch das Buch A. Krappel (Hsg.): Kurbelwellenstartgenerator (KSG) - Basis für zukünftige Fahrzeugkonzepte, 1. Auflage, 1999, und darin insbesondere der Artikel von B. Hoffmann: "ISAD-Technologie: Kompakte Hochleistung im KSG", S. 6 - 23, offenbart Antriebssysteme mit Kurbelwellen-Starter-Generatoren.

Zum Betrieb einer solchen elektrischen Kurbelwellenmaschine ist i. a. eine Leistungselektronikeinheit erforderlich, die z.B. Wechselspannungen frei wählbarer Frequenz, Phase und Amplitude erzeugen kann, also einen sog. Wechselrichter bildet. Wenn es sich bei der Maschine um eine Mehrphasenmaschine handelt, versorgt die Leistungselektronikeinheit die einzelnen Phasen im Motorbetrieb mit Spannungen mit einer Frequenz, Phase und Amplitude, die so gewählt sind, daß ein geeignetes voreilendes drehmomenterzeugendes Drehfeld in der Ständerwicklung der elektrischen Maschine erzeugt wird. Im Generatorbetrieb genügt es bei einer Synchronmaschine, die induzierten Wechselspannungen gleichzurichten; die Leistungselektronikeinheit braucht dann nur als spannungsgesteuertes Ventil (nach Art einer Diode) zu arbeiten. Bei einer Asynchronmaschine ist hingegen auch im Generatorbetrieb ein geeignetes (dann nacheilendes) Drehfeld zu erzeugen, was wiederum durch Generierung von Spannungen geeigneter Frequenz, ggf. Phase und Amplitude, mit Hilfe der Leistungselektronikeinheit geschieht. Ein solcher Wechselrichter ist i.a. aus Leistungshalbleiter-Schaltern und einem oder mehreren Kondensatoren aufgebaut. Die Leistungshalbleiter werden mit einer schnellen Taktfrequenz phasenrichtig ein- und ausgeschaltet und dabei z.B. gemäß einer Sinusbewertung pulsweitenmoduliert. Das so erhaltene Spannungspulsmuster ergibt aufgrund der Tiefpaßwirkung der Induktivität der elektrischen Maschine näherungsweise sinusförmige Ströme der gewünschten Frequenz, Amplitude und Phase.

Im Stand der Technik ist die Leistungselektronikeinheit beispielsweise in einem im wesentlichen würfelförmigen Gehäuse untergebracht, das im Motorraum des Kraftfahrzeugs am Fahrzeug-Chassis befestigt ist. Für die elektrische Verbindung der Leistungselektronikeinheit mit der elektrischen Maschine sorgt ein flexibles Kabel, z.B. Litzenleiterkabel, welches eine Relativbewegung zwischen der auf der Kurbelwelle sitzenden elektrischen Maschine und dem Fahrzeug-Chassis zuläßt. In dem genannten Artikel von B. Hoffmann in Krappel ist in den Bildern 5 und 6 eine solche Leistungselektronikeinheit gezeigt.

Es sei angemerkt, daß es sich bei den hier interessierenden Kurbelwellenmaschinen um besondere elektrische Maschinen handelt, da diese vom Verbrennungsmotor permanent mitgeschleppt werden und so relativ hohe Drehzahlen bei gleichzeitig relativ großem Läuferdurchmesser zu bewältigen haben. Dabei sind sie der vom Verbrennungsmotor abgegebenen Wärme und den Vibrationen und Drehungleichförmigkeiten des Verbrennungsmotors ausgesetzt. Die Anordnung der Kurbelwellenmaschine schafft aufgrund der durchgehenden Kurbelwelle und des normalerweise geringen verfügbaren Raums (der meist nur dem herkömmlicherweise vom Schwungrad samt Kupplung oder - bei einem Motor mit Automatikgetriebe - dem von der Flexplatte eingenommenen Raum entspricht) besondere Randbedingungen hinsichtlich der räumlichen Ausbildung der Maschine, und zwar erfordert sie i.a. eine scheibenartige Bauweise (d.h. einen kurzen Läufer mit großem Durchmesser), wobei die Maschine stirnseitig nicht zugänglich ist. Aus diesen Gründen unterscheiden sich die hier interessierenden Kurbelwellenmaschinen samt zugehöriger Leistungselektronikeinheit stark von anderen elektrischen Maschinen, z.B. solchen für Elektrofahrzeugantriebe oder stationäre Antriebe. In dem gattungsfremden Stand der Technik betreffend solche anderen Maschinen gibt es eine Reihe von Vorschlägen hinsichtlich der Relativanordnung und Verbindung von Elektronikeinheiten und elektrischer Maschine:

Aus dem Bereich herkömmlich riemengetriebener Kraftfahrzeuggeneratoren ist aus der DE 197 15 925 eine Gleichrichtereinheit mit einer Abdeckung bekannt, welche verschiedene elektrische Bauteile abschirmt.

Aus dem Bereich der Antriebe für Elektrofahrzeuge ist aus der DE 198 17 333 C1 eine elektrische Antriebseinheit bekannt, bei welcher der Elektromotor und ein zugehöriges Elektronikmodul über interne Verbindungsleitungen, beispielsweise Phasenenden elektrisch miteinander verbunden sind. Die Kühlung des Elektromotors und des Elektronikmoduls erfolgt durch gemeinsame Nutzung eines Kühlkreislaufs.

Aus dem oben erwähnten Artikel von B. Hoffmann in Krappel ist es bekannt, eine elektrische Kurbelwellenmaschine mit dem Verbrennungsmotorkühlwasser zu kühlen. Es ist dort auch erwähnt, daß auch eine Kühlung der Leistungselektronikeinheit am Verbrennungsmotor-Kühlwasserkreislauf möglich wäre.

Aus der DE 196 05 037 A1 ist ein Antrieb, z.B. für Pumpen, Lüfter und Schieber, mit einem drehzahlveränderlichen Umrichter-gespeisten Drehstrom-Asynchronmotor bekannt, bei welchem ein Frequenzumrichter, eine Steuerschaltung sowie ein Drehwinkelmeßgeber zur Abschirmung gegen elektromagnetische Störungen entweder in einzelnen Gehäusen oder zusammen mit dem Asynchronmotor in einem gemeinsamen Gehäuse angeordnet sind.

Ferner ist aus der US 5,714,816 ein offenbar stationärer Elektromotor mit einem Frequenzwandler bekannt, dessen Gehäuse abnehmbar am Elektromotorgehäuse angebracht ist, wobei die elektrische Verbindung zwischen den Gehäusen über Rohrleitungen hergestellt ist. Daneben ist aus der DE 197 14 784 A1 ein Kompaktantrieb mit einem elektrischen Motor bekannt, bei welchem der zugehörige Frequenzumrichter auf einer Stirnseite des elektrischen Motors angeordnet ist.

DE 196 26 213 A1 zeigt einen Antriebsmotor für ein Elektrofahrzeug mit am stirnseitigen Lageschild angeordneten elektronischen Bauelementen, die gemeinsam mit dem Elektromotor gekühlt werden.

Aus der DE 100 06 877 A1 ist ein Antriebssystem mit einem Verbrennungsmotor und einer als Generator oder Motor wirkenden elektrischen Maschine bekannt, die mit einer Leistungselektronikeinheit ausgerüstet ist. Zur Kühlung dieser Aggregate ist ein Kühlsystem vorgesehen, welches zwei Kühlkreisläufe aufweist, und zwar einen ersten zur Kühlung des Verbrennungsmotors und der elektrischen Maschine und einen zweiten zur Kühlung der Leistungselektronikeinheit.

Aus der DE 43 27 261 C1 ist ein Antriebssystem mit einer Brennstoffzelleneinheit und einem Elektro-Fahrmotor mit zugehörigem Leistungssteller bekannt. Zur Kühlung dieser Aggregate sind zwei Kühlmittelkreisläufe mit unterschiedlichen Temperaturniveaus vorgesehen, wovon der eine die Brennstoffzelleneinheit und die andere den Elektro-Fahrmotor und den Leistungssteller kühlt.

Die vorliegende Erfindung ist gemäß einem ersten Aspekt auf ein Kraftfahrzeug-Antriebssystem gerichtet, welches folgendes aufweist: Einen Verbrennungsmotor, eine elektrische Motor, welche eine Mehrphasenmaschine ist, und eine Mehrphasen-Leistungselektronikeinheit für die elektrische Maschine. Die elektrische Maschine ist dabei als Starter, Generator oder Starter-Generator ausgebildet. Die Leistungselektronikeinheit ist relativ zur elektrischen Maschine in axialer und radialer Richtung versetzt angeordnet. Die elektrische Maschine und die Leistungselektronikeinheit sind über starre elektrische Leitungen elektrisch miteinander verbunden.

Gemäß einem zweiten Aspekt ist die Erfindung auf ein Kraftfahrzeug-Antriebssystem gerichtet, welches folgendes aufweist: Einen Verbrennungsmotor, eine elektrische Maschine, und eine Leistungselektronikeinheit für die elektrische Maschine. Der Verbrennungsmotor weist Befestigungspunkte auf, die für die Befestigung eines herkömmlichen Zahnkranzeinspur-Starters geeignet sind. Die elektrische Maschine ist als Starter oder Starter-Generator ausgebildet. Sie sitzt auf der Kurbelwelle des Verbrennungsmotors oder einer Verlängerung hiervon. Die Leistungselektronikeinheit ist an den genannten Befestigungspunkten befestigt und ist in demjenigen Bereich angeordnet, in dem ein herkömmlicher Zahnkranzeinspur-Starter liegen würde.

Die Erfindung wird nun anhand von bevorzugten Ausführungsbeispielen unter beigefügten, beispielhaften Zeichnungen näher erläutert. In der Zeichnung zeigen:
Fig. 1 eine Schemadarstellung eines Kraftfahrzeug-Antriebssystems mit Verbrennungsmotor, elektrischer Kurbelwellenmaschine und zugehöriger Leistungselektronikeinheit;
Fig. 2 eine schematische Darstellung des Schnitts II-II aus Fig. 1;
Fig. 3 eine perspektivische Ansicht eines Abschnitts eines radial geschichteten Stromringpakets;
Fig. 4 eine perspektivische Ansicht eines axial geschichteten Stromringpakets;
Fig. 5 eine perspektivische Ansicht eines Abschnitts eines vollständig mit Wicklung und Stromringen bestückten Ständers;
Fig. 6 eine perspektivische Ansicht eines Ständerausschnitts mit Nuten, in welche Wicklungsformteile eingesetzt sind;
Fig. 7 eine schematische Darstellung einer weiteren Anordnungsmöglichkeit der Leistungselektronikeinheit;
Fig. 8 eine schematische Darstellung von noch weiteren Anordnungsmöglichkeiten der Leistungselektronikeinheit.

In den Figuren sind funktionsgleiche oder -ähnliche Elemente mit gleichen Bezugszeichen gekennzeichnet.

Bevor die Figuren näher erläutert werden, folgen zunächst einige Anmerkungen zu den bevorzugten Ausführungsformen.

Bei den bevorzugten Ausführungsformen handelt es sich bei der elektrischen Maschine um eine Mehrphasenmaschine, vorzugsweise eine Dreiphasenmaschine, die als Asynchronmaschine oder, alternativ, als Synchronmaschine ausgebildet ist. Der Läufer der elektrischen Maschine sitzt auf der Kurbelwelle des Verbrennungsmotors oder einer Verlängerung der Kurbelwelle (im folgenden wird der Einfachheit halber die Möglichkeit der Anbringung auf einer Kurbelwellenverlängerung nicht mehr ausdrücklich erwähnt; die Nennung einer Anbringung auf der Kurbelwelle und die Bezeichnung der Maschine als "Kurbelwellenmaschine" soll diese Möglichkeit mit umfassen). Vorzugsweise ist der Läufer der elektrischen Maschine drehfest mit der Kurbelwelle verbunden; er dreht also permanent mit gleicher Drehzahl wie diese. Die elektrische Maschine weist bei den gezeigten bevorzugten Ausführungsformen kein Eigenlager auf; vielmehr ist ihr auf der Kurbelwelle sitzender Läufer über die Kurbelwellenlager gelagert. Bei anderen bevorzugten Ausführungsformen ist der konzentrisch auf der Kurbelwelle sitzende Läufer über ein Planetengetriebe mit der Kurbelwelle gekoppelt und dreht somit mit kleinerer oder größerer Drehzahl als diese. Bei den besonders bevorzugten Ausführungsformen ist die elektrische Maschine als kombinierter Starter-Generator ausgebildet, d.h. als Maschine, die wahlweise im Motor- und Generatorbetrieb betrieben werden kann und so konstruiert ist, daß sie einerseits im Motorbetrieb ausreichendes Drehmoment und Kurzzeitleistung aufbringt, daß sie den Verbrennungsmotor ggf. ohne Untersetzung aus dem Stand hochdrehen und starten kann, und die andererseits auf den relativ hohen Drehzahlen eines Verbrennungsmotors permanent mitdrehen kann und dabei im Generatorbetrieb eine ausreichende elektrische Leistung aufbringt. Bei weniger bevorzugten, aber gleichwohl vorteilhaften Ausführungsformen ist die elektrische Kurbelwellenmaschine nur als Starter oder nur als Generator ausgebildet.

Obgleich die elektrische Maschine grundsätzlich am freien Ende der Kurbelwelle angeordnet sein kann, ist bei den bevorzugten Ausführungsformen eine Anordnung gewählt, bei welcher sie auf der mit dem Antriebsstrang gekoppelten Seite der Kurbelwelle sitzt. Und zwar sitzt sie dann vorzugsweise zwischen dem Verbrennungsmotor und dem im Antriebsstrang nachfolgenden Getriebe. Die Maschine ist bei den bevorzugten Ausführungsformen scheibenartig gebaut und nimmt im wesentlichen denjenigen Raum ein, der bei einem herkömmlichen Antriebssystem für das Schwungrad samt Kupplung oder - bei einem Motor mit Automatikgetriebe - für die Flexplatte vorgesehen ist. Die elektrische Maschine ist bei dieser Anordnung stirnseitig nicht zugänglich.

Bei der Leistungselektronikeinheit handelt es sich bei den bevorzugten Ausführungsformen um einen aus Leistungshalbleiter-Schaltern aufgebauten Wechselrichter, mit dem durch geeignete sinusbewertete Pulsweitenmodulation für die einzelnen Phasen der Maschine Spannungspulse erzeugt werden, die aufgrund der Tiefpaßwirkung der Induktivität der elektrischen Maschine näherungsweise zu sinusförmigen Strömen der gewünschten Frequenz, Amplitude und Phase führen.

Anders als bei dem eingangs genannten bekannten Antriebssystem sind bei den bevorzugten Ausführungsformen die elektrische Maschine und die Leistungselektronikeinheit nicht relativbeweglich zueinander. Vielmehr ist die Leistungselektronikeinheit direkt oder indirekt starr mit der elektrischen Maschine verbunden, beispielsweise indem sie an der elektrischen Maschine selbst befestigt ist oder an einem gegenüber der elektrischen Maschine nicht relativbeweglichen Teil des Antriebssystems, wie dem Verbrennungsmotor oder dem Getriebe. Aufgrund der nicht-relativbeweglichen Anordnung dienen zur elektrischen Verbindung von Leistungselektronikeinheit und elektrischer Maschine starre elektrische Leitungen. Bei den bevorzugten Ausführungsformen ist die elektrische Maschine auf der durchgehenden Kurbelwelle zwischen Verbrennungsmotor und Getriebe angeordnet, während die Leistungselektronikeinheit radial nach außen versetzt, und zwar radial außen an der elektrischen Maschine angeordnet ist. Außerdem ist sie relativ zur elektrischen Maschine in axialer Richtung versetzt angeordnet. Bei den besonders bevorzugten Ausführungsformen ist sie in Richtung Verbrennungsmotor axial versetzt angeordnet, bei anderen bevorzugten Ausführungsformen ist sie hingegen in Richtung zum Getriebe axial versetzt angeordnet.

Besonders bevorzugt ist eine Befestigung der Leistungselektronikeinheit direkt am Verbrennungsmotor, und zwar in demjenigen Bereich, in dem ein herkömmlicher Zahnkranzeinspur-Starter liegen würde. Hierzu folgende Erläuterung: Ein Zahnkranzeinspur-Starter ist der bei heutigen Serien-Kraftfahrzeugen übliche Starter. Das Schwungrad des Verbrennungsmotors ist für dessen Verwendung mit einem Zahnkranz ausgerüstet. Der Starter ist in der Regel mit einem Einrückrelais und einem Einspurgetriebe ausgerüstet, mit deren Hilfe er für den Startvorgang in den Schwungrad-Zahnkranz eingespurt werden kann. Der Starter ist herkömmlicherweise am schwungradseitigen Ende des Verbrennungsmotors befestigt, und zwar i.a. so, daß die Achse des Starters parallel zur Kurbelwellenachse ungefähr am Umfang des Schwungrads verläuft, so daß das Starterritzel mit dem Zahnkranz kämmt. Für die Befestigung eines solchen Zahnkranzeinspur-Starters weisen Verbrennungsmotoren üblicherweise Befestigungspunkte, z.B. Gewindelöcher am schwungradseitigen Ende auf.

Bei den bevorzugten Ausführungsformen des Kurbelwellenstarters entfällt der herkömmliche Zahnkranzeinspur-Starter, und der für ihn im Motorraum vorgesehene Platz am Verbrennungsmotor und die für seine Befestigung vorgesehenen Befestigungspunkte sind somit nicht mehr durch den Starter belegt. Bei den bevorzugten Ausführungsformen dient nun der herkömmlicherweise für den Zahnkranzeinspur-Starter vorgesehene Einbauraum am Verbrennungsmotor der Unterbringung der Leistungselektronikeinheit für den Kurbelwellenstarter, wobei deren Befestigung an den für den Zahnkranzeinspur-Starter vorgesehenen Befestigungspunkten erfolgt. (Nebenbei sei angemerkt, daß durch den Wegfall des herkömmlichen Zahnkranzeinspur-Starters auch der Zahnkranz entfällt; im übrigen übernimmt der Läufer der elektrischen Kurbelwellenmaschine durch sein Trägheitsmoment die Funktion des Schwungrades, so daß auch dieses entfallen kann).

Bei den bevorzugten Ausführungsformen hat die am Ort des herkömmlichen Zahnkranzeinspur-Starters befestigte Leistungselektronikeinheit-Außenabmessungen, welche ungefähr einem üblichen Zahnkranzeinspur-Starter entsprechen, so daß sie den durch den entfallenen Starter freigewordenen Einbauraum ausnutzt, aber keinen weiteren Einbauraum in Anspruch nimmt. Und zwar betragen die äußeren Abmessungen der Leistungselektronikeinheit im Verhältnis von Länge zu Breite zu Höhe etwa 2:1:1, wobei die Längenrichtung parallel zur Kurbelwelle verläuft.

Die Befestigung der Leistungselektronikeinheit am Ort des herkömmlichen Zahnkranzeinspur-Starters stellt einen Spezialfall der oben genannten axial und radial versetzten Anordnung dar. Bei den gezeigten bevorzugten Ausführungsformen erfolgt auch in diesem Spezialfall vorteilhafterweise die elektrische Verbindung von elektrischer Maschine und Leistungselektronikeinheit über starre elektrische Leitungen. Dies ist aber keineswegs zwingend; die elektrische Verbindung der beiden Einheiten kann beispielsweise auch über flexible elektrische Leitungen, z.B. Litzenleiter, erfolgen.

Bei den bevorzugten Ausführungsformen hat die elektrische Maschine eine Wicklung, die eine der Anzahl der Phasen entsprechende Zahl von Strängen aufweist. Jeder Strang hat mehrere Spulen. Diese sind an umlaufende, zur Kurbelwelle koaxiale, Stromringe angeschlossen. Wenn beispielsweise pro Strang mehrere Spulen oder Spulengruppen parallel geschaltet sind, so sind diese z.B. in regelmäßigen Abständen entlang des Umfangs an die Stromringe angeschlossen. Bei den bevorzugten Ausführungsbeispielen wird eine der Anzahl der Stränge entsprechende Anzahl von Stromringen verwendet. Zusätzlich kann bei einer Sternschaltung ein weiterer Stromring für die Verbindung der Stränge untereinander (das ist der sog. "Sternpunkt") vorgesehen sein. Es ist aber auch eine solche Sternschaltung mit einer direkt durchgeschleiften Verbindung der einzelnen Spulenenden möglich, ohne hierfür einen eigenen Stromring vorzusehen. Auch bei einer Dreieickschaltung entfällt der Stromring für den Sternpunkt. Die Stromringe weisen bei den bevorzugten Ausführungsformen Anschlüsse auf, welche direkt mit den Ausgängen der Leistungselektronikeinheit starr verbunden sind. Vorzugsweise sind die Anschlüsse als zapfenartige Fortsätze der Stromringe ausgebildet, die quer zur Umlaufrichtung (d.h. beispielsweise radial nach außen oder in Axialrichtung) von den Stromringen abstehen. Bei der starren Verbindung zwischen Leistungselektronikeinheit und Stromringen kann es sich um eine lösbare Verbindung, z.B. um eine Steckverbindung, oder eine nicht-lösbare Verbindung, z.B. eine Schweißverbindung handeln.

Bei den bevorzugten Ausführungsformen ist die Leistungselektronikeinheit in Höhe der Stromringe angeordnet. Genauer ausgedrückt, ist die Längsachse der Leistungselektronikeinheit (welcher ungefähr mittig durch die Leistungselektronikeinheit in Richtung ihrer längsten Seite verläuft) koaxial zur Kurbelwellenachse ausgerichtet, wobei dieser Abstand der Längsachse zur Kurbelachse etwa dem Radius der Stromringe entspricht. Die starren elektrischen Leitungen, die bei den bevorzugten Ausführungsformen die elektrische Maschine und die Leistungselektronikeinheit verbinden, verlaufen dann parallel zur Kurbelwelle und treffend senkrecht auf die Stromringe oder die Stromringanschlüsse.

Grundsätzlich ist es möglich, die starren Verbindungsleiter zwischen Leistungselektronikeinheit und elektrischer Maschine nach Art eines flexiblen Kabels abzuschirmen, also beispielsweise durch einen Flechtschirm und/oder eine dünne Metallfolie. Bei den bevorzugten Ausführungsformen weist die Leistungselektronik jedoch ein Gehäuse auf, welches sich zur elektrischen Maschine erstreckt und den Bereich der elektrischen Verbindung der Leistungselektronikeinheit mit der elektrischen Maschine elektromagnetisch abschirmt. Neben dieser Gehäuseabschirmung kann natürlich zusätzlich eine Abschirmung nach Art eines Flechtschirms und/oder einer Schirmfolie vorgesehen sein, welche die starren Verbindungsleiter jeweils einzeln oder gemeinsam umschließt.

Angesichts der nicht-relativbeweglichen Anordnung von Verbrennungsmotor, elektrischer Maschine und Leistungselektronikeinheit ist bei den Ausführungsformen hinsichtlich der Kühlung eine vorteilhafte Lösung gewählt, bei welcher sowohl die Leistungselektronikeinheit als auch die elektrische Maschine an den Verbrennungsmotor-Kühlkreislauf angeschlossen sind. Und zwar ist ein vom Rücklauf des Verbrennungsmotor-Kühlers kommender Kühlkreis vorgesehen, welcher parallel zum eigentlichen Verbrennungsmotor-Kühlkreis läuft, in welchem die Leistungselektronikeinheit und die elektrische Maschine in Serie geschaltet sind. Die Serienschaltung ist derart, daß im Kühlkreislauf in Richtung des Kühlmittelflusses zuerst die Leistungselektronikeinheit und dahinter die elektrische Maschine angeordnet ist. Räumlich ist die Kühlkreisverbindung so aufgebaut, daß die Leistungselektronikeinheit an derjenigen Seite, an der sie elektrisch mit der elektrischen Maschine verbunden ist, auch mit einer Kühlmittelleitung mit dieser verbunden ist, welche z.B. parallel zu den starren elektrischen Leitungsverbindungen verläuft. Insgesamt liegt somit bei den bevorzugten Ausführungsformen eine material- und raumsparende elektrische und kühlmäßige Verbindung von Leistungselektronikeinheit und elektrischer Maschine vor.

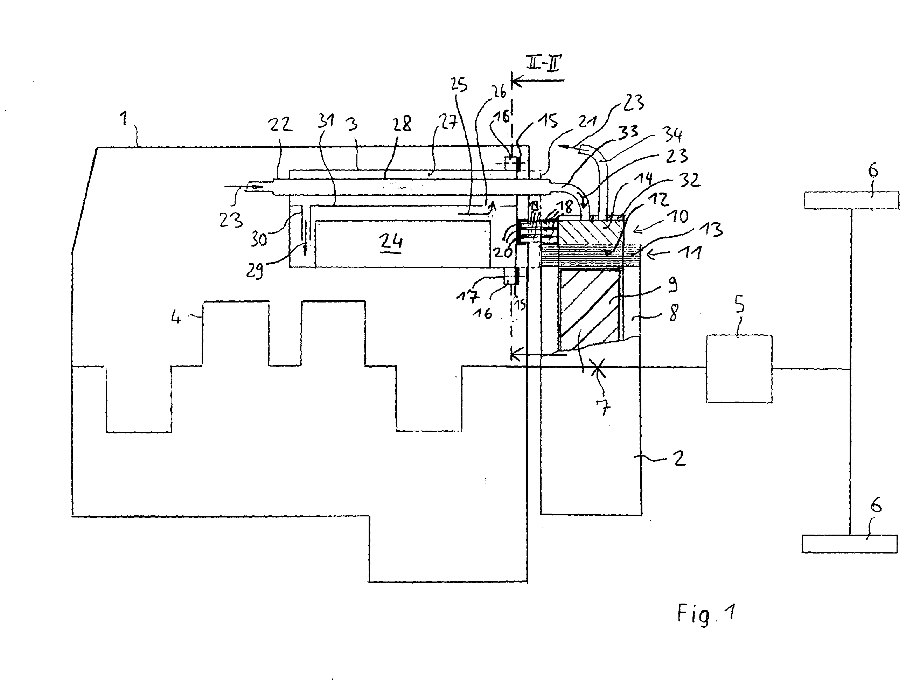

Nun zurückkehrend zu Fig. 1, ist dort eine Schemadarstellung eines Antriebssystems für ein (nicht weiter dargestelltes) Kraftfahrzeug mit einem Verbrennungsmotor 1, einer elektrischen Kurbelwellenmaschine 2 und einer zugehörigen Leistungselektronik 3 gezeigt. Die elektrische Maschine 2 und die Leistungselektronikeinheit 3 samt zugehöriger Steuereinheit sind so ausgebildet, daß die elektrische Maschine 2 einerseits zum Starten des Verbrennungsmotors 1 motorisch und andererseits zur Stromerzeugung bei laufendem Verbrennungsmotor 1 generatorisch betrieben werden kann. Sie stellt also einen kombinierten Starter-Generator dar. Motor- und Generatorbetrieb unterscheiden sich z.B. im Fall einer Asynchronmaschine dadurch, daß sich im Motorbetrieb das magnetische Drehfeld schneller als der Läufer (positiver Schlupf) und im Generatorbetrieb langsamer als dieser (negativer Schlupf) dreht, mit der Folge, daß im ersten Fall elektrische Wirkleistung in die Maschine eingespeist und von dieser in mechanische Leistung umgewandelt wird, während im zweiten Fall mechanische Leistung in elektrische Wirkleistung verwandelt wird, die aus der elektrischen Maschine entnommen und einem elektrischen Energiespeicher oder -verbraucher zugeführt wird.

Der Verbrennungsmotor 1 weist eine Kurbelwelle 4 auf, welche auf einer Seite (in Fig. 1 rechts) herausgeführt ist und über ein Getriebe 5 Antriebsräder 6 des Kraftfahrzeugs antreibt. Auf dem herausgeführten Teil der Kurbelwelle 4 sitzt, zwischen dem Verbrennungsmotor 1 und dem Getriebe 5, die elektrische Maschine 2 mit einem Ständer 8 und einem Läufer 9. Der Läufer 9 ist permanent drehfest mit der Kurbelwelle 4 verbunden (dies ist in Fig. 1 durch ein Kreuz 7 symbolisiert). Bei anderen (nicht gezeigten) Ausführungsformen ist der Läufer lösbar mit der Kurbelwelle gekoppelt (z.B. durch Zwischenschaltung einer Kupplung), oder er dreht mit einer höheren oder niedrigeren Drehzahl als die Kurbelwelle (z.B. durch Zwischenschaltung eines Planetengetriebes).

Die elektrische Maschine 2 ist in Fig. 1 teilweise in Schnittdarstellung gezeigt, wodurch der Läufer 9 und der innere Aufbau des Ständers 8 sichtbar ist. Der Ständer 8 weist einen genuteten Ständerkörper 10 mit mehreren Spulen 11 auf. In der Schnittdarstellung von Fig. 1 verläuft die Schnittebene durch eine der Nuten des Ständerkörpers 10, so daß die in der aufgeschnittenen Nut in Axialrichtung verlaufenden Nutleiter 12 sichtbar sind. Verbindungsleiter 13 dienen der Verbindung der Nutleiter 12 in einer Nut der Spule 11 mit in einer anderen Nut der Spule 11 verlaufenden anderen Nutleitern. Die Verbindungsleiter 13 verlaufen im wesentlichen in Tangentialrichtung (in Fig. 1 senkrecht zur Papierebene), und zwar in Axialrichtung außerhalb des Ständerkörpers 10 auf dessen Stirnseiten. Radial außerhalb des genuteten Bereichs weist der Ständerkörper 10 einen Ständerrücken 14 auf, welcher der Rückführung des magnetischen Flusses dient.

Da die auf der Kurbelwelle 4 am Ort des herkömmlichen Schwungrads sitzende elektrische Maschine 2 für das Starten des Verbrennungsmotors 1 sorgt, entfällt bei dem Antriebssystem gemäß Fig. 1 das herkömmliche Schwungrad und der herkömmliche, mit dem Schwungrad in Eingriff bringbare Zahnkranzeinspur-Starter, so daß der für diesen herkömmlichen Starter vorgesehene Bauraum frei ist. Dieser Bauraum wird bei der Ausführungsform gemäß Fig. 1 von der Leistungselektronikeinheit 3 eingenommen, wie unten noch näher erläutert wird.

Die Leistungselektronikeinheit 3 ist bei den bevorzugten Ausführungsformen ein Wechselrichter, der mit Hilfe von elektronischen Schaltern (Leistungshalbleitern), die zum Betrieb der elektrischen Maschine 2 erforderlichen Phasen-Wechselspannungen geeigneter Frequenz, Amplitude und Phase erzeugt, so daß sich im Ständer 8 der elektrischen Maschine 2 die zur Erzeugung antreibender oder bremsender Drehmomente geeigneten Drehfelder ausbilden. Eine zur geeigneten Ansteuerung der elektronischen Schalter geeignete Steuerung ist vorzugsweise in die Leistungselektronikeinheit 3 integriert, kann alternativ aber auch in einem separaten Steuergerät an einem anderen Ort im Motorbauraum angeordnet sein.

In Fig. 1 ist die im Bauraum eines herkömmlichen Zahnkranzeinspur-Starters angeordnete Leistungselektronikeinheit 3 zur Verdeutlichung übertrieben groß dargestellt, tatsächlich hat sie hingegen höchstens die Größe des herkömmlichen, für den jeweiligen Verbrennungsmotor 1 vorgesehenen Zahnkranzeinspur-Starters: Beispielsweise hat sie eine Länge von ca. 150 mm, eine Breite von ca. 70 mm und eine Höhe von ca. 80 mm und damit ein Volumen von weniger als einem Liter, was einem herkömmlichen Zahnkranzeinspur-Starter mit einer Leistung von ca. 1 kW entspricht. Das Gewicht der Leistungselektronikeinheit 3 beträgt bei diesem Beispiel etwas mehr als 2 kg. Ihre ungefähr mittig in Längsrichtung der Leistungselektronikeinheit 3 verlaufende Längsachse verläuft parallel zur Kurbelwellenachse, und liegt ungefähr dort, wo die Drehachse, deren Ritzel mit dem herkömmlichen Schwungrad kämmen würde, läge. Die Leistungselektronikeinheit 3 ist somit relativ zur elektrischen Maschine in axialer und radialer Richtung versetzt angeordnet. Sie ist am Verbrennungsmotor 1 befestigt, und ist somit nicht-relativbeweglich zum Verbrennungsmotor 1 und zur elektrischen Maschine 2. Zu ihrer Befestigung dienen Befestigungspunkte 15, die am Verbrennungsmotor 1 für die Anbringung eines herkömmlichen Zahnkranzeinspur-Starters vorgesehen sind. Bei kleineren Verbrennungsmotoren sind üblicherweise nur zwei solche Befestigungspunkte 15 am abtriebsseitigen Ende vorgesehen (wie in Fig. 1 dargestellt), bei größeren ist hingegen ggf. ein weiterer Befestigungspunkt für das andere Ende des herkömmlichen Zahnkranzeinspur-Starters vorgesehen. Die Leistungselektronikeinheit 3 weist komplementär zu den Befestigungspunkten 15 Befestigungsflansche 16 mit Bohrlöchern 17 auf, welche mit den Befestigungspunkten 15 z.B. durch Bolzen verschraubt sind.

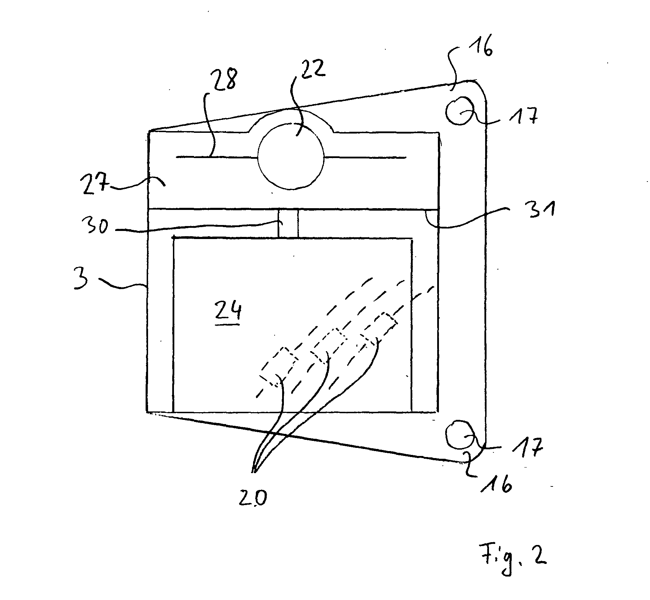

Der Ständer 8 weist, entsprechend der Anzahl der Stränge der elektrischen Maschine 2, eine Anzahl (hier drei) Stromringe 18 auf, an welche jeweils mehrere parallel geschaltete Spulen 11 des zugehörigen Strangs angeschlossen sind. Bei den Stromringen 18 handelt es sich um starre Metallringe, welche aus Materialersparnisgründen aus einzelnen Ringsektoren zusammengesetzt sein können. Sie sind in einem Ringraum radial außerhalb der Verbindungsleiter 13 und axial vor dem Ständerrücken 14 auf der zum Verbrennungsmotor 1 gerichteten Stirnseite der elektrischen Maschine 2 angeordnet. Bei der in Fig. 1 dargestellten Ausführungsform sind die drei Stromringe 18 in radialer Richtung geschichtet. Sie weisen stoffschlüssig verbunden (z.B. verschweißt) in axialer Richtung zur Leistungselektronikeinheit 3 abstehende starre Anschlußzapfen 19 auf. Diese sind in Umfangsrichtung der Stromringe 15 zueinander versetzt angeordnet (Fig. 2). Die Anschlußzapfen 16 bilden somit starre elektrische Leitungen, welche die elektrische Maschine 2 und die Leistungselektronik 3 direkt elektrisch miteinander verbinden. Bei dem in den Fig. 1 und 2 dargestellten Ausführungsbeispiel sind für die Verbindung über die Anschlußzapfen 19 aufgesteckte Anschlußschuhe 20 vorgesehen. Alternativ zu dieser Steckverbindung können auch andere lösbare Verbindungsarten gewählt werden, etwas Schraub- oder Klemmverbindungen, alternativ auch nicht-lösbare Verbindungen, wie z.B. Schweiß- oder Lötverbindungen. Natürlich ist auch eine umgekehrte Konstruktion möglich, bei der Stromschienen (entsprechend den Anschlußzapfen) aus dem Inneren der Leistungselektronik 3 herausgeführt sind und direkt mit den Stromringen 18 verbunden, z.B. verschweißt sind.

In dem weniger bevorzugten, aber ebenfalls vorteilhaften, Fall, daß die elektrische Maschine 2 keine Stromringe aufweist, sondern die Leiterenden der Stränge aus dem Ständer herausgeführt sind, können diese, praktisch starren Kupferleiter direkt mit der Leistungselektronikeinheit 3 verbunden sein. Statt der Anschlußschuhe 20 kann dann auch eine andere geeignete Verbindung zwischen den Leitern und dem Ausgang der Leistungselektronikeinheit vorgesehen sein, z.B. eine Verschraubung von Sammelösen für die Strangenden am Leistungselektronik-Ausgang.

Die Leistungselektronikeinheit 3 weist einen (in Fig. 1 gestrichelt dargestellten) Gehäuseteil 21 aus leitendem Material auf, welcher von der Leistungselektronikeinheit 3 bis zur elektrischen Maschine 2 heranreicht und hierdurch den Bereich der elektrischen Verbindung zwischen Leistungselektronikeinheit 3, also die Anschlußschuhe 20 und den aus der elektrischen Maschine 1 herausragenden Teil der Anschlußzapfen 19 umschließt und somit elektromagnetisch abschirmt.

Wie anhand der Fig. 1 und 2 veranschaulicht ist, werden die Leistungselektronikeinheit 3 und die elektrische Maschine 2 gemeinsam mit Hilfe eines Kühlmittelflusses 22 gekühlt. Dieser ist Teil eines (nicht dargestellten) Kühlmittelkreislaufs des Verbrennungsmotors 2. Und zwar sind die Leistungselektronikeinheit 3 und die elektrische Maschine 2 im Kühlmittelfluß 22 in Serie hinteinander geschaltet, und diese Serienschaltung liegt im Kühlmittelkreislauf parallel zum Verbrennungsmotor. Beispielsweise liegt der Kühlmittelfluß 22 im Rücklauf vom Verbrennungsmotorkühler, so daß das Kühlmittel auf möglichst niedrigem Temperaturniveau in die Leistungselektronikeinheit 3 eintritt. Der Kühlmittelfluß 22 wird hierbei nach dem Verbrennungsmotorkühler vom Verbrennungsmotorkühlmittelkreislauf abgezweigt und fließt, wie durch die Pfeile 23 in Fig. 1 symbolisiert ist, zunächst durch die Leistungselektronikeinheit 3 und anschließend durch den Ständer 8 der elektrischen Maschine 2. Durch diese Reihenfolge liegt die Leistungselektronikeinheit 3 auf niedrigerem Temperaturniveau als die (weniger wärmeempfindliche) elektrische Maschine 2.

Die eigentliche Kühlung der verschiedenen Wärmequellen 24 in der Leistungselektronikeinheit 3 - bei denen es sich hauptsächlich um Leistungshalbleiter, daneben aber auch um Kondensatoren und Stromleiter handelt - erfolgt mit Hilfe einer Siedebadkühlung, die wie folgt funktioniert: Der Innenraum der Leistungselektronikeinheit 3 ist hermetisch abgeschlossen und mit einem Siedemittel, z.B. einem Fluorkohlenwasserstoff gefüllt, wobei der Druck im Innenraum so eingestellt ist, daß der Siedepunkt des Siedemittels bei der gewünschten Kühltemperatur liegt, also z.B. bei einer Rücklauftemperatur des Verbrennungsmotorkühlmittels von 105°C bei 120°C. Wenn eine Wärmequelle 24 die Siedetemperatur überschreitet, verdampft am Ort der Wärmequelle 24 Siedemittel, so daß deren Temperatur durch Entzug der Verdampfungswärme nicht über die Siedetemperatur steigen kann. Der Siedemitteldampf, symbolisiert durch Pfeil 25 in Fig. 1, steigt durch eine Öffnung 26 in eine oberhalb der Wärmequellen 24 liegende Kondensationskammer 27, und kondensiert dort an einem mit dem Kühlmittelfluß 22 thermisch gekoppelten Wärmetauscher 28 unter Abgabe der Kondensationswärme. Die kondensierte Siedeflüssigkeit fließt dann wieder, wie durch einen Pfeil 29 symbolisiert ist, durch eine Leitung 30 zum Boden des Innenraums der Leistungselektronikeinheit 3 zurück. Abgesehen von den Öffnungen 26 und 30 ist die Kondensationskammer 27 von dem zu kühlenden Raum mit den Wärmequellen 24 durch eine Trennwand 31 getrennt. Bei anderen (nicht gezeigten) Ausführungsformen ist keine solche Trennwand vorhanden; der Siedemitteldampf steigt dort direkt nach oben zum Wärmetauscher 26, und das Kondensat läuft von dort direkt zurück auf den Siedeflüssigkeitsspiegel.

Der Ständer 8 der elektrischen Maschine 2 ist mit einem Kühlmantel 32 ausgerüstet, welcher am Außenumfang des Ständers 8 umläuft. Das Kühlmittel des Kühlmittelflusses 22 tritt über eine starre Verbindungsleitung 33, von der Leistungselektronik 3 kommend, an einer Stelle des Umfangs in den Kühlmantel 32 ein, strömt in diesem einmal um den Ständer 8 herum und verläßt die elektrische Maschine 2 an einer nahe dem Eintritt angeordneten Rücklaufleitung 34 zum Verbrennungsmotorkreislauf. Um eine Kurzschlußströmung zu vermeiden, ist der Kühlmantel 32 zwischen der Verbindungsleitung 33 und der Rücklaufleitung 34 in Umfangsrichtung unterbrochen. Der Ständerkörper 10 wird somit durch Wärmeleitung von dem außenliegenden Kühlmantel 32 gekühlt. Eine Kühlung des Läufers 9 ist nur indirekt über Wärmestrahlung und Konvektion zu dem diesen umgebenden Ständer 8 vorgesehen, was für typische Anwendungen aber ausreicht.

Die mehreren Stromringe 18 sind bei den bevorzugten Ausführungsformen zu einem Stromringpaket 35 isolierend verbunden, z.B. durch Klebung mit Isolierzwischenschichten. Sie bilden hierdurch gemeinsam ein einziges Bauteil, was den Montagevorgang sowie die Befestigung am Ständer 8 vereinfacht. Das Stromringpaket 35 füllt stirnseitig am Ständerkörper 10 den freien Raum radial außerhalb der Verbindungsleiter 13 und axial vor dem Ständerrücken 14 aus. Die Stromringe 18 nutzen damit einen ansonsten nicht nutzbaren Raum des Ständers 8 aus und liegen einerseits in unmittelbarer Nähe der Spulenenden und andererseits der Leistungselektronikeinheit 3.

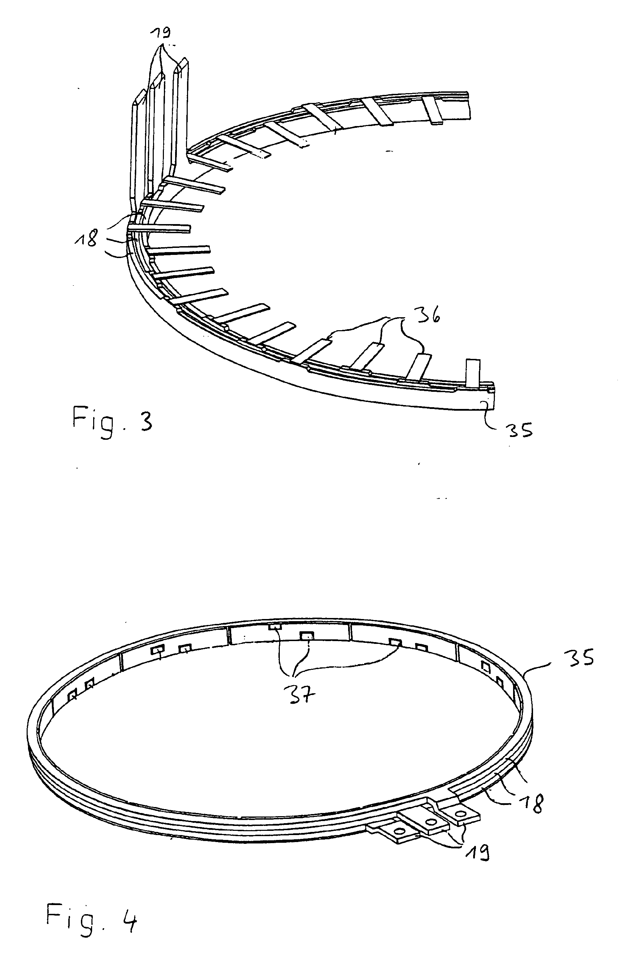

Die Stromringe 18 können im Stromringpaket 35 in radialer oder, alternativ, in axialer Richtung (bezogen auf die Drehachse der elektrischen Maschine 2) geschichtet sein. Eine - bereits in Fig. 1 gezeigte - radiale Schichtung ist detailliert in Fig. 3 dargestellt. Eine alternative Ausführungsform mit axialer Schichtung ist in Fig. 4 gezeigt. Bei dem radial geschichteten Stromringpaket 35 sind zum Anschluß der einzelnen Spulen Anschlußlaschen 36 vorgesehen, welche radial nach innen gerichtet sind und axial aus der Ebene des Stromringpakets herausversetzt sind, so daß sie - soweit sie mit dem mittleren oder äußeren Stromring 18 verbunden sind - an dem inneren und ggf. mittleren Stromring 18 vorbeiführen, ohne diesen zu kontaktieren. Hingegen sind bei dem axial geschichteten Stromringpaket 35 gemäß Fig. 4 sämtliche Stromringe 18 direkt von innen zugänglich, so daß hier keine axiale Vorbeiführung benötigt ist. Wenn das Stromringpaket 35 auf der Innenseite mit einer isolierenden Schicht ausgerüstet ist oder mit Leiterabschnitten, die nach Vorschalten mit Spulenenden zusammen den sog. Sternpunktleiter bilden (wie in Fig. 4 dargestellt), so sind für den Anschluß der Spulenenden an die jeweiligen Stromringe 18 Kontaktfenster 37 vorgesehen, die entlang dem Umfang verteilt an verschiedenen Axialpositionen entsprechend der Lage des jeweils zu kontaktierenden Stromrings 18 im Stromringpaket 35 angeordnet sind. Umgekehrt gestaltet sich der Anschluß der Leistungselektronikeinheit 3 bei dem radial geschichteten Stromringpaket 35 einfacher als bei dem axial geschichteten: Bei der Ausführungsform mit radial geschichtetem Stromringpaket 35 gemäß Fig. 3 stehen die Anschlußzapfen 19 in axialer Richtung von den einzelnen Stromringen 18 ab; diese stellen bereits die starren Verbindungsleitungen zur Leistungselektronikeinheit 3 dar und sind dort beispielsweise direkt in die Anschlußschuhe 20 eingesteckt. Aufgrund der radialen Schichtung der Stromringe 18 ist es grundsätzlich möglich, die Anschlußzapfen 19 übereinanderliegend, unter Zwischenschaltung von Isolierschichten anzuordnen. Bei dem in Fig. 3 gezeigten Ausführungsbeispiel ist von dieser Möglichkeit kein Gebrauch gemacht, hier sind vielmehr die Anschlußzapfen 19 der einzelnen Stränge in Umfangsrichtung versetzt angeordnet. Dies spiegelt sich in einer entsprechend versetzten komplementären Anordnung der Anschlußschuhe 20 an der Leistungselektronikeinheit 3 wider (siehe Fig. 2). Bei axial geschichtetem Stromringpaket 35 gemäß Fig. 4 sind die Anschlüsse des - von der Leistungselektronikeinheit 3 gesehenen - mittleren und hinteren Stromrings 18 an dem vorderen und ggf. mittleren Stromring 18 vorbeizuführen, ähnlich wie dies bei dem radial geschichteten Stromringpaket 35 gemäß Fig. 3 für die Anschlußlaschen 36 der Fall ist. Diese Vorbeiführung ist gemäß Fig. 4 dadurch realisiert, daß die Anschlußzapfen 19 zunächst radial nach außen führen und sich schließlich nach einer rechtwinkligen Umlenkung in Richtung Leistungselektronikeinheit 3 erstrecken. In Fig. 4 ist nur der radial nach außen geführte Teil der Anschlußzapfen 19 gezeigt; rechtwinklig auf diesen stehende radial verlaufende Verbindungsleiter zur Leistungselektronikeinheit 3 sind mit diesen z.B. verschraubt oder verschweißt. Bei anderen Ausführungsformen sind die zunächst radial nach außen und dann in Axialrichtung umgelenkten Anschlußzapfen aus einem Stück durch Umformen (z.B. Biegen) hergestellt. Auch bei der axial geschichteten Ausführungsform ist die in Fig. 4 gezeigte Versetzung der Anschlußzapfen 19 in Umfangsrichtung vorteilhaft, da sie eine entsprechend in Umfangsrichtung versetzte Anordnung der in Axialrichtung führenden Verbindungsleiter ermöglicht.

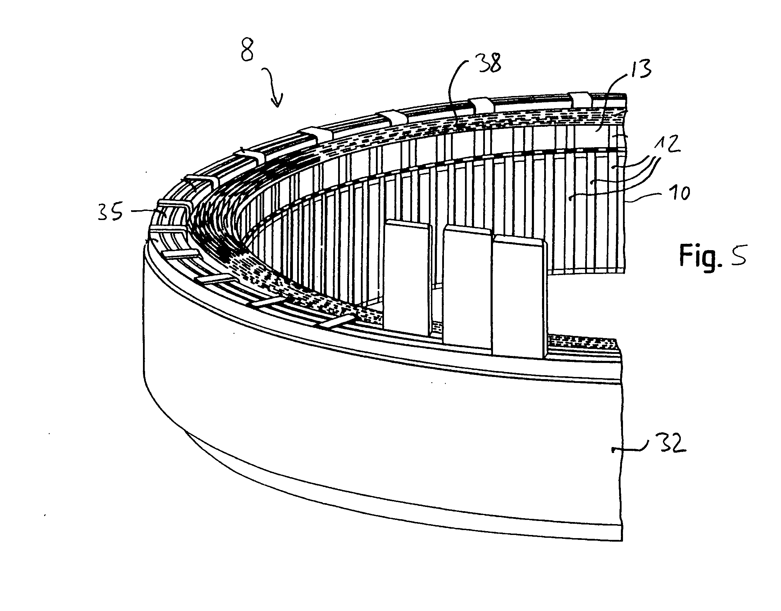

Fig. 5 zeigt den vollständig mit dem Stromringpaket 35 gemäß Fig. 3 sowie einer Wicklung bestückten Ständer 8. In den Nuten des Ständerkörpers 10 ist der jeweils radial innerste Nutleiter 12 zu sehen. Die die Nutleiter 12 einer Spule verbindenden Verbindungsleiter 13 bilden auf beiden Stirnseiten des Ständers 8 ein kompaktes umlaufendes Verbindungsleiterpaket 38. Radial außerhalb des Verbindungsleiterpakets 38 ist das zuvor beschriebene Stromringpaket 35 gemäß Fig. 3 angeordnet. Die in Fig. 3 gestreckt dargestellten Anschlußlaschen 36 sind zwischen dem Verbindungsleiterpaket 38 und dem Stromringpaket 35 nach innen abgebogen und dort jeweils mit einem Spulenende verbunden.

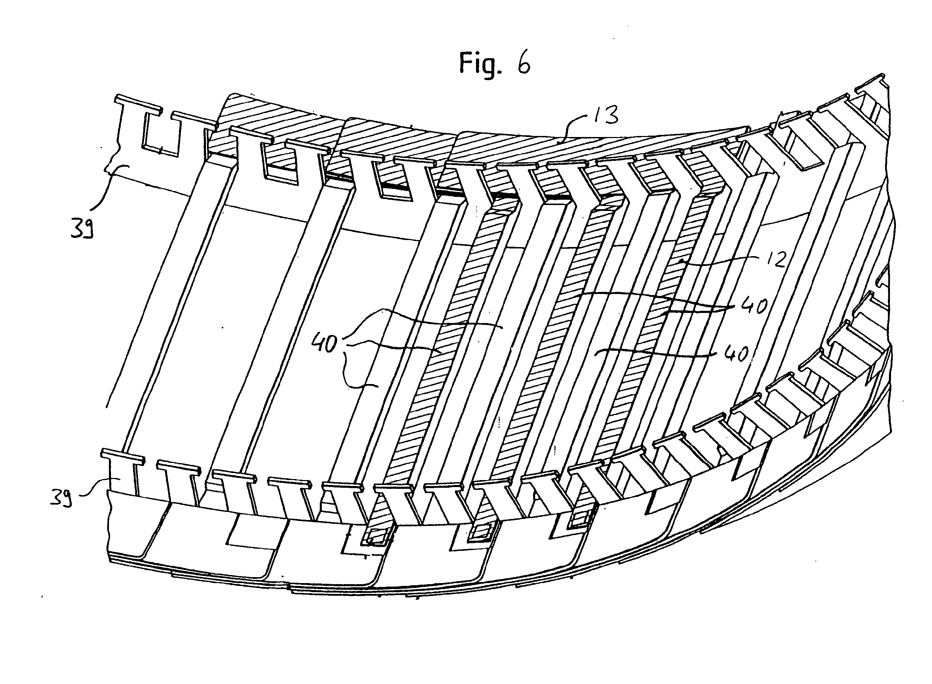

Bei den besonders bevorzugten Ausführungsformen ist die Wicklung nicht aus einem zusammenhängenden Draht gewickelt (obwohl diese Möglichkeit auch umfaßt sein soll), sondern aus einer Vielzahl einzelner vorgeformter Formteile aufgebaut, die beim Zusammenbau in die Nuten eingelegt und an Verbindungsstellen mit anderen derartigen Formteilen elektrisch verbunden, z.B. verschweißt werden. Zur Veranschaulichung einer solchen bevorzugten Formteilwicklung sind in Fig. 6 vom Ständerkörper 10 nur die beiden äußeren Stirnflächen 39 eingezeichnet. Der Ständerkörper 10 ist typischerweise aus einem in Axialrichtung geschichteten Stapel von Elektroblechen hergestellt. Die in Fig. 6 dargestellten Stirnseiten 39 entsprechen also jeweils dem äußersten Blech des Blechpakets. Fig. 6 zeigt den noch im Aufbau befindlichen Ständer 8, bei dem erst ein Teil einer ersten Lage von Wicklungs-Formteilen 40 in den Ständerkörper 10 eingesetzt sind. Die Formteile 40 sind L-förmig. Eine zusammenhängende Spule 11 wird dadurch hergestellt, daß jeweils an den beiden Enden des "L" eine Verbindung zu jeweils einem benachbarten L-förmigen Formteil 40 hergestellt wird, wobei das eine benachbarte eine darunterliegende und das andere eine darüberliegende Halbwindung bildet. Die einzelnen Spulen überlappen einander, so daß im Verbindungsleiterpaket 38 jeweils Verbindungsleiter 13 von verschiedenen Spulen 11 verlaufen. Der Aufbau dieser überlappenden Spulen 11 erfolgt lagenweise; d.h. es wird konsekutiv für den ganzen Ständer 8 eine Formteillage in die Nuten eingesetzt und mit zuvor eingesetzen Formteilen 40 verschweißt, dann erfolgt das Einsetzen und Verschweißen der nächsten Lage. Die Spulenanfänge werden nicht mit anderen Formteilen 40, sondern zwecks Verbindung mit den Stromringen 18 jeweils mit einer Anschlußlasche 36 verschweißt. Vorteilhafterweise sind jeweils zwei benachbarte Spulen 11 hintereinander geschaltet, wobei in der ersten der beiden Spulen 11 die Windung nach radial innen und in der zweiten nach radial außen fortschreitet und die beiden Spulen radial innen verbunden sind, so daß beide anzuschließende Spulenenden einer solchen Serienschaltung radial außen liegen, was für den Anschluß an das Stromringpaket 35 günstig ist. Ein derartiger Wicklungs- und Stromringaufbau für eine elektrische Kurbelwellenmaschine ist aus der eingangs genannten Druckschrift PCT/EP01/06272 bekannt, deren Offenbarung hiermit durch Bezugnahme in die vorliegende Beschreibung aufgenommen wird.

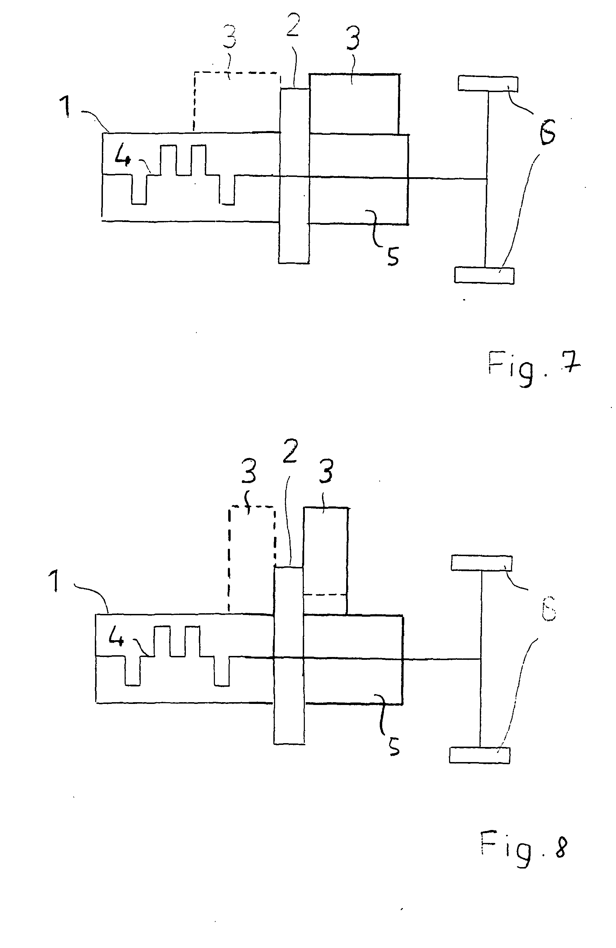

Die Fig. 7 und 8 zeigen schließlich in schematischer Form weitere Ausführungsbeispiele von in axialer und radialer Richtung versetzten Anordnungen der Leistungselektronikeinheit 3 relativ zur elektrischen Maschine 2, bei denen die Leistungselektronikeinheit 3 jedoch nicht am Ort eines herkömmlichen Zahnkranzeinspur-Starters liegt. So zeigt Fig. 7 neben der gestrichelt dargestellten, oben erläuterten besonders bevorzugten Einbaulage am Ort des Zahnkranzeinspur-Starters mit durchgezogenen Linien eine getriebeseitige Anordnung, bei welcher die Leistungselektronikeinheit 3 am Getriebe 5 befestigt ist. Fig. 8 zeigt eine weitere Ausführungsform, bei der die Leistungselektronikeinheit 3 mit ihrer Längsachse quer zur Kurbelwellenachse orientiert ist. Sie kann hierbei wiederum am Getriebe 5 befestigt ist (in Fig. 8 mit durchgezogener Linie dargestellt) oder, alternativ, am Verbrennungsmotor 2 (in Fig. 8 mit gestrichelter Linie dargestellt).

Bei den bevorzugten Ausführungsformen entfallen die für eine Verbindung zwischen Leistungselektronikeinheit und elektrischer Maschine üblicherweise vorgesehenen Kabel, was nicht nur eine bauliche Vereinfachung und materialmäßige Einsparung darstellt, sondern die Schaffung einer relativ niederinduktiven Anbindung mit vorteilhafter elektromagnetischer Verträglichkeit erlaubt. Da die Verbindung bei den bevorzugten Ausführungsformen relativ kurz ist, lassen sich zudem - unter der Maßgabe, daß der Gesamt-Leitungswiderstand gleich bleiben soll, die erforderlichen Leitungsquerschnitte erheblich reduzieren. Die Anordnung der Leistungselektronikeinheit am Ort des herkömmlichen Zahnkranzeinspur-Starters erlaubt die Ausrüstung bestehender herkömmlicher Fahrzeugkonstruktionen mit einem Kurbelwellenstarter, ohne daß hierfür größere Änderungen in der Motorraumkonstruktion erforderlich wären. Auf besonders einfache Weise kann bei dieser bevorzugten Anordnung die Einheit von elektrischer Kurbelwellenmaschine und zugehöriger Leistungselektronikeinheit gemeinsam in Anbindung an den Verbrennungsmotorkühlkreislauf gekühlt werden.

## Patentansprüche

1. Kraftfahrzeug-Antriebssystem, mit:
- einem Verbrennungsmotor (1),
- einer elektrischen Maschine (2), die als Starter, Generator oder Starter-Generator ausgebildet ist und auf der Kurbelwelle (4) des Verbrennungsmotors (1) oder einer Verlängerung hiervon sitzt, wobei die elektrische Maschine (2) eine Mehrphasenmaschine ist,
- einer Mehrphasen-Leistungselektronikeinheit (3) für die elektrische Maschine (2),
wobei die Leistungselektronikeinheit (3) relativ zur elektrischen Maschine (2) in axialer und radialer Richtung versetzt angeordnet ist, und
die elektrische Maschine (2) und die Leistungselektronikeinheit (3, 3') über starre elektrische Leitungen elektrisch miteinander verbunden sind.

2. Kraftfahrzeug-Antriebssystem nach Anspruch 1, bei welchem der Verbrennungsmotor (1) Befestigungspunkte (15) aufweist, die für die Befestigung eines herkömmlichen Zahnkranzeinspur-Starters geeignet sind, und die Leistungselektronikeinheit (3) an den Befestigungspunkten (15) befestigt ist und in demjenigen Bereich angeordnet ist, in dem ein herkömmlicher Zahnkranzeinspur-Starter liegen würde.

3. Kraftfahrzeug-Antriebssystem, mit:
- einem Verbrennungsmotor (1), welcher Befestigungspunkte (15) aufweist, die für die Befestigung eines herkömmlichen Zahnkranzeinspur-Starters geeignet sind,
- einer elektrischen Maschine (2), die als Starter oder Starter-Generator ausgebildet ist und auf der Kurbelwelle (4) des Verbrennungsmotors (1) oder einer Verlängerung hiervon sitzt,
- einer Leistungselektronikeinheit (3) für die elektrische Maschine (2),
wobei die Leistungselektronikeinheit (3) an den genannten Befestigungspunkten (15) befestigt ist und in demjenigen Bereich angeordnet ist, in dem ein herkömmlicher Zahnkranzeinspur-Starter liegen würde.

4. Kraftfahrzeug-Antriebssystem nach einem Ansprüche 1 bis 9, bei welchem bei den äußeren Abmessungen der Leistungselektronikeinheit (3) das Verhältnis von Länge zu Breite zu Höhe etwa 2:1:1 beträgt.

5. Kraftfahrzeug-Antriebssystem nach Anspruch 4, bei welchem die Leistungselektronikeinheit (3) über starre elektrische Leitungen elektrisch miteinander verbunden sind.

6. Kraftfahrzeug-Antriebssystem nach Anspruch 1,2 oder 5, bei welchem die elektrische Maschine (2) eine mehrphasige Wicklung mit Spulen aufweist, welche an umlaufende Stromringe (18) angeschlossen sind, wobei die Stromringe Anschlüsse aufweisen, welche direkt mit Ausgängen der Leistungselektronikeinheit (3) starr verbunden sind.

7. Kraftfahrzeug-Antriebssystem nach Anspruch 6, bei welchem die Anschlüsse als zapfenartige Fortsätze (19) der Stromringe (8c) ausgebildet sind und quer zur Umlaufrichtung von den Stromringen (18) abstehen.

8. Kraftfahrzeug-Antriebssystem nach Anspruch 6 oder 7, bei welchem die Längsachse der Leistungselektronikeinheit (3) koaxial zur Kurbelwellenachse ausgerichtet ist und der Abstand dieser Längsachse zur Kurbelwellenachse etwa dem Radius der Stromringe (18) entspricht.

9. Antriebsanordnung nach einem der Ansprüche 6 bis 8, bei welchem die die elektrische Maschine und die Leistungselektronikeinheit (3) verbindenden starren elektrischen Leitungen koaxial zur Kurbelwellenachse verlaufen und senkrecht auf die Stromringe (18) oder die Stromringanschlüsse treffen.

10. Kraftfahrzeug-Antriebssystem nach einem der Ansprüche 1 bis 8, bei welchem die Leistungselektronikeinheit (3) ein Gehäuse aufweist, welches den Bereich der elektrischen Verbindung mit der elektrischen Maschine (2) elektromagnetisch abschirmt.

11. Kraftfahrzeug-Antriebssystem nach einem Ansprüche 1 bis 11, bei welchem ein Kühlkreislauf zur Kühlung des Verbrennungsmotors (1) vorgesehen ist, und die Leistungselektronikeinheit (3) und die elektrischen Maschine (2) zur Kühlung an den Verbrennungsmotor-Kühlkreislauf angeschlossen sind.

12. Kraftfahrzeug-Antriebssystem nach Anspruch 11, bei welchem die Leistungselektronikeinheit (3, 3') und die elektrischen Maschine (2) im Kühlkreislauf in Serie geschaltet sind.

13. Kraftfahrzeug-Antriebssystem nach Anspruch 12, bei welchem in Richtung des Kühlmittelflusses in der Serienschaltung zuerst die Leistungselektronikeinheit (3, 3') und dahinter die elektrischen Maschine (2) angeordnet ist.
